# EUROPEAN PATENT SPECIFICATION

(11) **EP 4 012 338 B1**
(45) Date of publication and mention of the grant of the patent: **28.01.2026**
(21) Application number: 20212769.2
(22) Date of filing: 09.12.2020
(51) Int. Cl.: G01C 21/16, G01C 21/28, B60W 60/00, G05D 1/00, G06N 3/08, G01S 17/931, G08G 1/16, G01C 21/36, G01C 21/34, G01S 17/86, G01S 17/89

(54) **GUIDING A MOTOR VEHICLE BASED ON A CAMERA IMAGE AND A NAVIGATIONAL COMMAND**
FÜHRUNG EINES KRAFTFAHRZEUGS AUF DER BASIS EINES KAMERABILDES UND EINES NAVIGATIONSBEFEHLS
GUIDAGE D'UN VÉHICULE À MOTEUR SUR LA BASE D'UNE IMAGE DE CAMÉRA ET D'UNE COMMANDE DE NAVIGATION

(43) Date of publication of application: 15.06.2022
(73) Proprietor: Valeo Schalter und Sensoren GmbH, 74321 Bietigheim-Bissingen (DE)
(72) Inventor: ERAQI, Hesham, Giza, Cairo (EG)
(74) Representative: Hofstetter, Schurack & Partner

(56) References cited:
- US-A1- 2019 278 277
- US-A1- 2020 238 999
- US-A1- 2020 353 917
- SHI WEIJING ET AL: "Algorithm and hardware implementation for visual perception system in autonomous vehicle: A survey", INTEGRATION, THE VLSI JOURNAL, vol. 59, 29 July 2017 (2017-07-29), pages 148 - 156, XP085164834, ISSN: 0167-9260, DOI: 10.1016/J.VLSI.2017.07.007
- ARDI TAMPUU ET AL: "A Survey of End-to-End Driving: Architectures and Training Methods", ARXIV.ORG, CORNELL UNIVERSITY LIBRARY, 201 OLIN LIBRARY CORNELL UNIVERSITY ITHACA, NY 14853, 13 March 2020 (2020-03-13), XP081621133

## Description

The present invention is directed to a method for guiding a motor vehicle at least in part automatically, wherein a camera image representing an environment of the motor vehicle is generated by a camera system of the motor vehicle and at least one driving command for guiding the motor vehicle at least in part automatically is generated depending on the camera image and depending on a navigational command by using a computing unit of the motor vehicle. The invention is further directed to an electronic vehicle guidance system for a motor vehicle and a computer program product.

In general, there are two main approaches to use machine learning architectures for autonomous or partly autonomous driving, namely mediated perception approaches and approaches based on end-to-end learning. Mediated perception approaches are based on a plurality of basically independent computer vision algorithms or visual perception algorithms for different tasks, such as object detection, lane detection, mapping, et cetera, whose outputs are then used for trajectory planning and controlling the actuators of the vehicle. In case of end-to-end approaches, the sensory input data gathered, for example from camera systems, are directly mapped to driving commands for controlling the vehicle, for example regarding the steering angle, acceleration or deceleration actions and so forth, via deep machine learning regression. In a sense, end-to-end solutions may be considered to optimize several mediated perception sub-problems simultaneously, wherein the system has learned to optimize its inferences aiming to a maximum overall performance.

End-to-end approaches have several advantages over mediated perception solutions in the context of autonomous driving. For example, the multiple outputs of the individual sub-algorithms of mediated perception need to be combined in a rule-based manner, which is a very difficult task to be achieved in a reliable manner, since it adds another level of complexity to an already extremely complex task such as autonomous driving.

One drawback of basic end-to-end solutions is sometimes denoted as machine learning algorithm confusion. This means, an algorithm learns, for example by conventional imitation learning in an end-to-end fashion, to select one specific solution to a given problem, even if in principle there may be different feasible possibilities. In other words, such algorithms do not sufficiently take into account the actual context of the system it is applied to. In case of autonomous driving applications, this may for example be the case at an intersection, when the vehicle may in principle take a turn to the left or to the right or cross the intersection in straight line. Depending on the context, in particular the underlying route, each of the alternatives may be valid, while an end-to-end trained algorithm may fail to select the appropriate option.

A solution to this problem has been presented by F. Codevilla et al. in their publication "End-to-end Driving via Conditional Imitation Learning", International Conference on Robotics and Automation (ICRA), IEEE 2018, also published as a preprint arxiv:1710.02410v2. This solution uses a perception deep neural network and on top multiple different command-conditional modules or branches, each of them predicting driving commands for a corresponding predefined navigational command. The different navigational commands, such as "turn left", "turn right", "go straight" et cetera, are predefined according to a desired route leading the vehicle from an initial location to a destination location. In consequence, the conditional imitation learning, CIL, solution makes use of all the advantages of basic end-to-end training approaches and, at the same time, allows the vehicle to take the specific turns at the sections to reach its destination.

However, the CIL approach fails to detect and avoid unexpected temporary stationary blockages on the road, such as work zones. Furthermore, the performance of the CIL method is limited in terms of generalization, when the algorithm is used in environments differing from the environments it has been trained on. Furthermore, also for changing weather conditions, inconsistencies in the performance level are observed.

Document DE 10 2016 122 031 A1 describes a resource-efficient mapping approach for a driver assistance system of a motor vehicle. A model of the motor vehicle is displayed in a map representing an environment of the motor vehicle, wherein the model is placed on the map and moved accordingly depending on the actual motor vehicle's movement in the environment. For example, the model may be placed on a circle with a diameter depending on the vehicle speed. An angular position of the model on the circle corresponds to a yaw angle of the motor vehicle. Thus, the model is always arranged with its longitudinal axis radial to the circle and is moved on the circular arc depending on the yaw angle of the motor vehicle. The lateral axis of the model is parallel to a tangent of the circular arc. In this way it is possible to adapt the displayed region of the map most efficiently, which reduces memory requirements. Furthermore, computational steps to rotate the whole map along with the movement of the motor vehicle are eliminated. This may also reduce inaccuracies due to the discrete nature of the map. The approach may, in particular, be used for occupancy grid mapping.

Document US 2020/353917 A1 describes systems and methods for planning and updating a trajectory of an autonomous vehicle. A perception module of the vehicle comprises a camera system and a lidar system and generates data, which is provided to a planning module in order to determine a trajectory. A control module generates operational commands in accordance with the trajectory depending on data from the perception module.

Document US 2019/278277 A1 describes real-time perception adjustment and driving adaption for an autonomous driving vehicle. Therein, in addition to the perception information from sensors, the behavior of surrounding vehicles is analyzed in order to detect a possible obstacle. A previously created path may then be adjusted accordingly. A sensor system of the vehicle includes a lidar unit and one or more cameras.

It is therefore an object of the present invention to provide an improved concept for guiding a motor vehicle at least in part automatically based on a camera image and a navigational command, which allows for a more reliable guiding of the vehicle in case of changing environmental conditions.

This object is achieved by the respective subject-matter of the independent claims. Further implementations and preferred embodiments are subject-matter of the depending claims.

The improved concept is based on the idea to capture the environment not only by means of a camera system but also by means of a lidar system of the motor vehicle and determine the navigational command based on a corresponding lidar pointcloud.

According to the improved concept, a method for guiding a motor vehicle at least in part automatically is provided. Therein, a camera image representing an environment of the motor vehicle is generated by a camera system of the motor vehicle. At least one driving command for guiding the motor vehicle at least in part automatically is generated depending on the camera image and depending on a navigational command by using a computing unit of the motor vehicle. A lidar pointcloud representing the environment is generated by a lidar system of the motor vehicle, and the navigational command is determined by the computing unit depending on the lidar pointcloud.

The computing unit, the camera system and/or the lidar system may for example part of an electronic vehicle guidance system of the motor vehicle.

An electronic vehicle guidance system may be understood as an electronic system, configured to guide a vehicle in a fully automated or a fully autonomous manner and, in particular, without a manual intervention or control by a driver or user of the vehicle being necessary. The vehicle carries out all required functions, such as steering maneuvers, deceleration maneuvers and/or acceleration maneuvers as well as monitoring and recording the road traffic and corresponding reactions automatically. In particular, the electronic vehicle guidance system may implement a fully automatic or fully autonomous driving mode according to level 5 of the SAE J3016 classification. An electronic vehicle guidance system may also be implemented as an advanced driver assistance system, ADAS, assisting a driver for partially automatic or partially autonomous driving. In particular, the electronic vehicle guidance system may implement a partly automatic or partly autonomous driving mode according to levels 1 to 4 of the SAE J3016 classification. Here and in the following, SAE J3016 refers to the respective standard dated June 2018.

Guiding the vehicle at least in part automatically may therefore comprise guiding the vehicle according to a fully automatic or fully autonomous driving mode according to level 5 of the SAE J3016 classification. Guiding the vehicle at least in part automatically may also comprise guiding the vehicle according to a partly automatic or partly autonomous driving mode according to levels 1 to 4 of the SAE J3016 classification.

The environment of the motor vehicle represented by the camera image and the lidar pointcloud may for example be considered as a common field of view of the camera system and the lidar system. In particular, the respective total fields of view of the camera system and the lidar system may not necessarily be identical to each other. However, at least a part of the total field of view of the lidar system is also captured by the total field of view of the camera system and vice versa.

The camera system comprises one or more cameras, which may for example be located at different positions of the vehicle. For example, the camera image corresponds to a camera image generated by one or more front facing cameras of the camera system.

Analogously, the lidar system may comprise one or more lidar sensors arranged at different positions of the motor vehicle, wherein the lidar pointcloud representing the environment may origin from the measurements of one or more forward facing lidar sensors.

The lidar sensors may for example be designed as a flash lidar sensors or laser scanners. In any case, the lidar pointcloud comprises a plurality of points characterized by respective three-dimensional coordinates, for example in a polar coordinate system with the respective lidar sensor in its center. For example, each point of the lidar pointcloud may be characterized by a radial distance and a direction, wherein the direction is given by two angles, in particular a horizontal angle and a vertical angle or, in other words, an azimuthal angle and a polar angle.

The cameras of the camera system may be configured to generate a respective camera image for each of a series of consecutive video frames. In the same way, the lidar sensors of the lidar system may be configured to generate respective lidar pointclouds for each of a series of consecutive lidar frames or scanning frames. The camera image used for generating the at least one driving command and the lidar pointcloud used for determining the navigational command are in particular generated during respective frames, which correspond to each other or at least overlap.

Preferably, the motor vehicle is designed as a self-driving motor vehicle or an autonomous motor vehicle, such that the method according to the improved concept corresponds to a method for fully autonomous guiding of the motor vehicle.

The at least one driving command concerns, in particular, a lateral control of the motor vehicle and/or a longitudinal control of the motor vehicle. For example, the driving commands may concern a steering angle or a change of the steering angle, a target speed of the motor vehicle or a change of the target speed and so forth. In other words, the at least one driving command may comprise commands causing the electronic vehicle guidance system to affect the steering angle via a steering system of the motor vehicle and/or the speed of the motor vehicle via a braking system of the motor vehicle and/or a drive system of the motor vehicle, in particular a drive engine. The at least one driving command may, however, also comprise concrete respective control signals to be supplied to the respective actuators of the motor vehicles to realize the change of the lateral position or longitudinal velocity of the vehicle.

In particular, the at least one driving command may comprise all information necessary for the electronic vehicle guidance system for controlling the motor vehicle at least in part automatically as described above.

The navigational command is, in particular, given by one of a predefined set of available navigational commands. In contrast to the at least one driving command, the navigational commands may be considered as high-level commands encoding the information how the motor vehicle shall act on a level of navigational routing. For example, the available navigational commands may comprise a command for the vehicle to turn left, to turn right, to go straight at an intersection or to keep on its present lane. The available navigational commands may be context dependent. For example, in case of an intersection upcoming in the near future, the available navigational commands may comprise the commands to turn left, turn right or to go straight. Analogously, when the vehicle is not currently approaching an intersection, the navigational command may correspond to a command for the vehicle to keep on the present lane.

The navigational commands may be considered as commands defining a route for the vehicle leading from an initial location to a destination location, for example according to a predefined roadmap. In particular, in case of a manually guided motor vehicle, the navigational commands would have to be processed and put into practice by a human driver.

The at least one driving command for guiding the motor vehicle may be generated by the computing unit based on an output of a specifically trained algorithm with an underlying machine learning architecture or deep learning architecture. In particular, the algorithm may comprise at least one artificial neural network or one or more modules of an artificial neural network. The algorithm is, in particular, trained to predict the at least one driving command based on the camera image, wherein the navigational command is taken into account as a boundary condition or as an additional input parameter in the sense of the concept of conditional imitation learning, CIL.

According to the improved concept, however, the navigational command is not predefined in terms of a static route for the motor vehicle but is generated dynamically by the computing unit depending on the lidar pointcloud.

In other words, the computing unit may determine, based on the lidar pointcloud, which of the available navigational commands is the suitable navigational command to be selected for the CIL-trained algorithm to achieve a certain goal, in particular, to guide the motor vehicle to a predefined destination location, without being tied to a previously appointed route. In other words, the computing unit may dynamically define or update the route by determining the navigational command based on the lidar pointcloud. Therefore, changes in the environment compared to the underlying training environment may be handled in a superior way since they are individually taken into account by evaluating the lidar pointcloud in order to select the determined navigational command. In this way, the advantages of CIL-based approaches for automated or partially automated driving are exploited, while their major drawback, namely its limited performance in case of changing environmental conditions, such as weather conditions, new towns or working zones on the road, are overcome. In other words, the problem of machine learning algorithm confusion may be overcome by means of the improved concept.

According to several implementations of the method for guiding a motor vehicle according to the improved concept, the motor vehicle is guided at least in part automatically by one or more actuators of the motor vehicle depending on the at least one driving command. In particular, the computing unit or a control unit of the motor vehicle or of the electronic vehicle guidance system is used to generate one or more control signals depending on the at least one driving command and provide the one or more control signals to the respective actuators.

According to several implementations, one branch of two or more branches of a trained artificial neural network is selected by the computing unit depending on the navigational command. An input depending on, in particular comprising, the camera image, is supplied to the trained artificial neural network by the computing unit. An output of the selected branch is computed depending on the input by the computing unit. The at least one driving command is generated depending on the output of the selected branch by the computing unit.

The trained artificial neural network may comprise a plurality of modules including the two or more branches. The branches may be considered as sub-networks of the trained artificial neural network. In particular, the trained artificial neural network is trained independently for each of the two or more branches. Apart of the two or more branches, the trained artificial neural network may comprise one or more further modules or sub-networks, which are trained together with each of the two or more branches.

In this way, it is achieved that, depending on the navigational command, the optimal inference model represented by the common modules of the trained artificial neural network in combination with the selected branch is used for generating the at least one driving command. Therefore, the concept of using a CIL-trained artificial neural network is embedded in the method according to the improved concept.

Apart from the camera image, the input may comprise one or more further camera images, the lidar pointcloud, one or more further lidar pointclouds, one or more further sensory dataset and/or one or more kinematic parameters of the motor vehicle, such as longitudinal velocity, steering angle, yaw rate, et cetera.

For a given input, the trained artificial neural network may, in principle, generate two or more different outputs, one for each of the two or more branches. The output of the selected branch may comprise or be identical to the one or more driving commands or the computing unit may process the output to obtain the at least one driving command.

The neural network is, in particular, stored on a memory unit of the motor vehicle, the computing unit or the electronic vehicle guidance system.

The trained artificial neural network may for example comprise one or more convolutional layers and may therefore also be denoted as a convolutional neural network, CNN. For example, the trained artificial neural network may be designed according to an encoder-decoder architecture, wherein the two or more branches correspond to or are comprised by respective decoder modules. The common modules of the trained artificial neural network may represent or comprise an encoder module.

According to several implementations, at least one module, in particular the common module, of the trained artificial neural network is applied to the input by the computing unit to generate an intermediate output. The selected branch is applied to the intermediate output by the computing unit to generate the output of the selected branch.

The intermediate output may for example comprise a plurality of feature maps, which are the fed to the respective selected branch according to the navigational command.

According to several implementations, the input depends on or comprises the lidar pointcloud.

By taking into account the lidar pointcloud in addition to the camera image for predicting the at least one driving command, a significant improvement of the method in terms of generalization to different environmental conditions may be achieved. In particular, the inclusion of the lidar pointcloud to the input for the trained artificial neural network makes the inference by the artificial neural network more robust with respect to different weather conditions.

For example, the computing unit may generate an additional image, for example a grey scale image, depending on the lidar pointcloud and the input comprises the additional image. For generating the image, the computing unit may for example make use of a polar grid view, PGV, representation.

The additional image consists of or comprises a two-dimensional array of pixels, in particular PGV pixels. Therein, each lidar layer, that is each subset of points of the lidar pointcloud with a constant vertical angle, is associated with a respective row of the PGV pixels. Each point of the lidar pointcloud is associated with a corresponding column of the additional image, in particular a column of the PGV pixels, according to its horizontal angle. Each PGV pixel has a value corresponding to an average radial distance for all points of the lidar pointcloud that are associated with that respective pixel.

In this way, the information encoded in the lidar pointcloud may be handled in the same way as the camera image by the trained artificial neural network, which allows to use very efficient architectures based on convolutional layers also for the lidar-based part of the input.

According to several implementations, an initial artificial neural network is trained by using end-to-end learning, in particular conditional imitation learning, in particular by the computing unit or by a further computing unit, to obtain the trained artificial neural network.

The training of the initial artificial neural network may be carried out according to conventional supervised learning approaches for each of the two or more branches separately. In particular, it is preferred to the publication of the F. Codevilla et al. cited above.

According to several implementations, a first route on a predefined roadmap leading to a predefined destination location on the roadmap is determined by the computing unit. An obstacle on the first route is identified by the computing unit depending on the lidar pointcloud. The navigational command is determined by the computing unit depending on the obstacle, for example depending on a position of the obstacle.

According to several implementations, a second route, which is in particular different from the first route, leading to the destination location, is determined by the computing unit, wherein the obstacle is not present on the second route. The navigational command is determined by the computing unit depending on the second route.

The roadmap corresponds to a map of roads, which are drivable for the motor vehicle and represents a predefined geographical area. The first and the second route correspond to a respective series of consecutive waypoints on the roadmap, which the motor vehicle may follow to reach the destination location. The first and the second route are, in particular, determined based on the roadmap or a modified version of the roadmap, respectively, and based on an initial location for or of the motor vehicle. The initial location may correspond to a predefined starting location for the motor vehicle and may be identical for the first and the second route. Alternatively, the initial location may correspond to an actual location of the vehicle, when the respective route is determined or to a preceding location of the vehicle. In particular, the initial location for the first and the second route may differ from each other.

The second route is, in particular, determined at a time after determining the first route. In other words, when the second route is determined or when the obstacle is identified, respectively, the motor vehicle may have followed a part or segment of the first route already. The obstacle, however, has a position, which does not allow the motor vehicle to follow the remaining part of the first route to the destination location. For example, the obstacle corresponds to an obstacle in the environment, which is located on a position corresponding to a location in the roadmap, which is intersected or approximately intersected by the first route.

For example, the first and the second route may be implemented as directed graphs, wherein the roadmap comprises a plurality of vertices representing the corresponding locations. In other words, the roadmap may comprise or correspond to a grid, wherein each grid cell has a state of a plurality of possible states. The possible states include a state corresponding to an obstacle and a state corresponding to a free or drivable road portion. The obstacles can be directional or non-directional. That means, the vehicle may not pass a cell in either direction in case the cell corresponds to a non-directional obstacle, while in case of directional obstacles, the vehicle may be prevented from passing the respective cell only in a certain direction. In case of a two-lane road, one for each direction, a non-directional obstacle may block both lanes, while a directional obstacle may block only one lane. By using the concept of directionality, a one-lane model may be used also for two-lane roads in order to reduce the computational demands.

The first and the second route may for example be determined by the computing unit by applying a path search algorithm, such as an A*-algorithm. Therein, the A*-algorithm may be applied to the roadmap in order to determine the first route and the A*-algorithm may be applied to the roadmap with a boundary condition to determine the second route, wherein the boundary condition defines that the second route may not cross the cell corresponding to the identified obstacle or may not cross the cell of the obstacle in a specific direction. In other words, the A*-algorithm may be applied to a modified roadmap reflecting the boundary condition in order to determine the second route.

Determining the navigational command depending on the obstacle or on the second route, respectively, may therefore be understood such that the navigational command is chosen from the available navigational commands such that the vehicle avoids the obstacle and, in particular, follows the second route, wherein the obstacle is not present on the second route.

It is noted that the roadmap does not necessarily have a particularly high resolution since it is only used to define the topology of the first and the second route depending on the available path leading to the destination location. Therefore, computational effort for determining the second route and the navigational command is limited.

According to several implementations, the roadmap is modified by the computing unit depending on a location of the obstacle. The second route is determined based on the modified roadmap.

In particular, the path search algorithm, for example the A*-algorithm, is applied to the modified roadmap in order to determine the second route. The modified roadmap may differ from the roadmap, for example in that the status of the cell or cells corresponding to the obstacle is different in the modified roadmap compared to the roadmap. While in the roadmap, the cell or cells corresponding to the location of the obstacle are free cells, this is not the case for the modified roadmap. Rather, the state of the cell or cells corresponding to the location of the obstacle indicates a directional or non-directional blockage or wall. In other words, the modified roadmap may be considered to comprise a wall at the position of the obstacle. In this way, a way of determining the second route and consequently the navigational command at low computational costs and memory requirements is provided.

According to several implementations, an occupancy grid map, OGM, is generated by the computing unit depending on the lidar pointcloud. A trajectory for the motor vehicle in the OGM is computed by the computing unit depending on the first route. For identifying the obstacle, a conflict of the trajectory with the obstacle is determined by the computing unit depending on the OGM.

The OGM comprises a further grid, wherein each cell of the OGM has a value indicating whether the respective cell is occupied or free. In other words, the values of the OGM cells are at least binary. However, there may be further values except for occupied and free, for example undetermined. The occupied cells of the OGM correspond to regions where, according to the lidar pointcloud, the motor vehicle cannot drive since there are other objects present. The free cells of the OGM corresponds to drivable space for the vehicle.

In particular, the OGM comprises the cells and a representation of the pose, that is position and orientation, of the motor vehicle. The OGM is for example repeatedly updated based on the pose of the motor vehicle and the lidar pointcloud of the actual lidar frame.

The trajectory for the motor vehicle begins at an actual position of the vehicle in the OGM and ends at some intermediate location defined by a predefined trajectory length or trajectory time. In particular, the trajectory is limited by the field of view or the visible space for the lidar system. In consequence, the trajectory does, in general, not lead to the destination location. However, in case the vehicle is already relatively close to the destination location and there is no obstacle preventing free view of the lidar system, the trajectory may also end at the destination location.

The trajectory as well as the first and second routes on the roadmap or modified roadmap, respectively, comprises a plurality of waypoints for the motor vehicle. However, while the routes may represent a topological or general definition of the waypoints to be followed by the motor vehicle, the trajectory in the OGM corresponds to actual target waypoints or coordinates the motor vehicle shall follow according to the automatic or partly automatic guiding. Therefore, the grid of the OGM may have a significantly higher resolution than the grid of the roadmap. In particular, the trajectory defines the one or more driving commands.

Once the trajectory is computed depending on the first route, the computing unit may determine whether there is a conflict of the trajectory with the obstacle, that is the trajectory passes through a location of the obstacle or a distance between the trajectory and the location of the obstacle falls below a predefined threshold. In this case, the obstacle may be considered to be identified to lie on the first route. As a next step, the second route is determined as described.

The described process may be iteratively repeated along with the motion of the motor vehicle until it reaches the destination location avoiding any obstacle on the roads. For example, the computing unit computes a further trajectory, or a modified trajectory depending on the second route and then again determines whether the further trajectory conflicts another obstacle or the same obstacle in the OGM or not and so forth.

For example an initial route for the motor vehicle in an initial roadmap or an initial version of the roadmap may be given. Depending on the initial route, an initial set of navigational commands may be determined, which navigate the motor vehicle from its initial position to the destination location according to the initial route. During the course of the motion of the motor vehicle, the route, and consequently the navigational commands, may be repeatedly updated in case obstacles are determined as described. In this way, during the whole motion of the motor vehicle from the initial location to the destination location, always one valid actual navigational command is defined, which may be provided to the trained artificial neural network to select the respective branch.

For generating the trajectory, the computing unit may for example resample the first route in the OGM according to the resolution of the OGM grid. The resampled first route may be smoothed by the computing unit, for example by determining a Bézier curve or another parametric smooth curve to represent the resample route. Optionally, the smoothed trajectory may be shifted by the computing unit to ensure that the shifted trajectory is positioned or centered on the correct lane of the motor vehicle. The shifting of the smoothed trajectory may for example be carried out in case a one-lane model is used for the roadmap. By means of the OGM, a reliable method for determining obstacles on the first route is provided.

According to several implementations, the obstacle is identified depending on a result of a visual perception algorithm, in particular a semantic segmentation algorithm, which is carried out by the computing unit depending on the camera image.

For example the conflict of the trajectory with the obstacle is determined based on the result of the visual perception algorithm. In particular, this allows to define, which objects in the environment are considered as obstacles and which are not. The result of the visual perception algorithm allows to classify objects or regions in the environment accordingly. For example, the result of the semantic segmentation algorithm may comprise a class, in particular an object class, for each pixel of the camera image. The classes may for example distinguish between static and dynamic objects. In this way, the class may be taken into account by the computing unit when determining whether there is a conflict with the trajectory. For example, dynamic objects may be neglected in this analysis. In particular, the obstacle is identified as a static object depending on the result of the visual perception algorithm and, in particular, of the semantic segmentation algorithm.

Visual perception algorithms and, in particular, semantic segmentation algorithms are particularly performant when applied to camera images. Consequently, a particularly reliable identification of the object may be achieved in this way.

It is noted that, according to the improved concept, the camera image is considered for determining the at least one driving command based on the navigational command and the lidar pointcloud is considered for determining the navigational command. However, in some implementations, the lidar pointcloud may also be an input to the trained artificial neural network as explained above. On the other hand, the camera image may be used to support the identification of the navigational command. In other words, the available sensory data may be used in a particularly efficient and synergetic manner.

According to several implementations, at least one initial driving command is generated depending on the camera image and depending on the navigational command by using the computing unit. A pose, in particular a position and/or orientation, of the motor vehicle is predicted by the computing unit depending on the at least one initial driving command and depending on a predefined kinematic model. The at least one driving command is generated by modifying the at least one initial driving command by the computing unit depending on the predicted pose of the vehicle.

In particular, the initial driving command depends on the output or is given by the output of the selected branch of the trained artificial neural network. The kinematic model puts the assumed driving commands, in particular the at least one initial driving command, such as initial steering angles or steering angle modifications or initial speed modifications, in relation to an expected pose of the motor vehicle. If the predicted pose conflicts with the obstacle or with a further obstacle, in particular according to the lidar pointcloud or the OGM analysis described above, the initial driving command may be modified to obtain the at least one driving command in order to avoid potential conflicts at an early state. The time scale for predicting the pose of the motor vehicle is, in this case, smaller than the time scale of the trajectory in the OGM. The kinematic model may for example comprise a bicycle model.

According to the improved concept, also an electronic vehicle guidance system for a motor vehicle is provided. The electronic vehicle guidance system comprises a camera system, which is configured to generate a camera image representing an environment of the motor vehicle. The electronic vehicle guidance system comprises a computing unit, which is configured to generate at least one driving command for guiding the motor vehicle at least in part automatically depending on the camera image and depending on the navigational command. The electronic vehicle guidance system comprises a lidar system, which is configured to generate a lidar pointcloud representing the environment, and the computing unit is configured to determine the navigational command depending on the lidar pointcloud.

Further implementations of the electronic vehicle guidance system according to the improved concept follow directly from the various implementations of the method according to the improved concept and vice versa.

In particular, an electronic vehicle guidance system according to the improved concept may be configured to carry out a method according to the improved concept or carries out such a method.

According to the improved concept, also a motor vehicle comprising an electronic vehicle guidance system according to the improved concept is provided.

According to the improved concept, also a computer program product comprising instructions is provided. When the instructions are executed by an electronic vehicle guidance system according to the improved concept, in particular, by the computing unit of the electronic vehicle guidance system, the instructions cause the electronic vehicle guidance system to carry out a method for guiding a motor vehicle at least in part automatically according to the improved concept.

The computer program product may for example comprise or consist of a computer program comprising the instructions. The computer program product may also comprise or consist of a computer-readable storage medium storing such a computer program comprising the instructions.

In the figures:
- Fig. 1: shows a schematic representation of a motor vehicle with an exemplary implementation of an electronic vehicle guidance system according to the improved concept;
- Fig. 2: shows a flow diagram of an exemplary implementation of a method according to the improved concept;
- Fig. 3: shows a schematic representation of a trained artificial neural network for use according to the improved concept;
- Fig. 4: shows a schematic representation of a lidar pointcloud and a corresponding image;
- Fig. 5A: shows an occupancy grid map and a corresponding roadmap for a first time instance;
- Fig. 5B: shows an occupancy grid map and a corresponding roadmap for a second time instance;
- Fig. 5C: shows an occupancy grid map and a corresponding roadmap for a third time instance;
- Fig. 5D: shows an occupancy grid map and a corresponding roadmap for a fourth time instance;
- Fig. 5E: shows an occupancy grid map and a corresponding roadmap for a fifth time instance;
- Fig. 5F: shows an occupancy grid map and a corresponding roadmap for a sixth time instance; and
- Fig. 5G: shows an occupancy grid map and a corresponding roadmap for a seventh time instance.

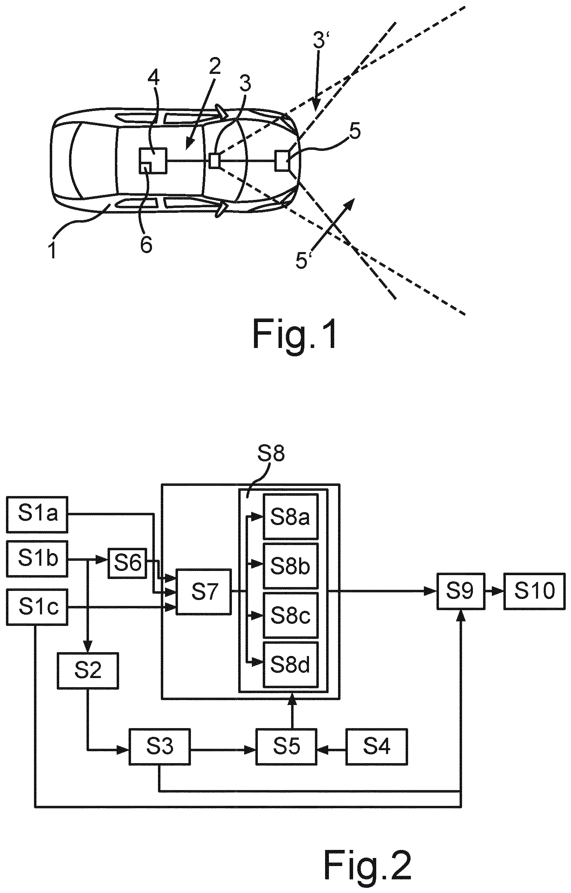

Fig. 1 shows a schematic representation of a motor vehicle 1 with an exemplary implementation of an electronic vehicle guidance system 2 according to the improved concept.

The electronic vehicle guidance system 2 comprises a camera system 3, in particular a front camera, for the motor vehicle 1, and a lidar system 5, for example a laser scanner facing in front direction. Respective fields of view 3', 5' of the camera system 3 and the lidar system 5 overlap in the environment of the vehicle 1 at least in part. The camera field of view 3' is represented by two delimiting dash-dotted lines and the lidar field of view 5' is indicated by two delimiting dashed lines in Fig. 1. The electronic vehicle guidance system 2 further comprises a computing unit 4, which is connected to the lidar system 5 as well as to the camera system 3.

The camera system 3 is configured to generate respective camera images for a sequence of consecutive video frames and provide these to the computing unit 4. The lidar system 5 is configured to emit light, for example infrared light, into the environment of the motor vehicle 1 and to detect reflected portions of the emitted light. The lidar system 5 is configured to determine the incoming directions or incoming angles of the reflected light, for example based on an arrangement of one or more optical detectors of the lidar system 5 and based on a position of a deflection unit of the lidar system 5, which may for example comprise a rotatable mirror, deflecting the incident light to the optical detectors. Furthermore, the lidar system 5 is configured to perform a time-of-flight measurement in order to determine a radial distance of an object that is responsible for reflecting the emitted light. In this way, the lidar system 5 is able to a respective lidar pointcloud generate for each of the lidar scan frames, wherein each point of the pointclouds is characterized by three-dimensional coordinates in a polar coordinate system or, in other words, by a horizontal incident angle, a vertical incident angle and a radial distance. The lidar system 5 is configured to provide the lidar pointclouds to the computing unit 4. In alternative implementations, the lidar system 5 is configured to provide raw measurement data or preprocessed measurement data to the computing unit 4 and the computing unit 4 is configured to generate the respective pointclouds based on the raw or preprocessed measurement data.

The computing unit 4 comprises a memory unit (not shown) storing a trained artificial neural network 6. The trained artificial neural network 6 has been trained, in particular in a supervised manner, in an end-to-end fashion to predict at least one driving command for driving the motor vehicle 1 automatically, in particular in a fully automated manner according to level 5 of the SAE J3016 classification, based on an input comprising a camera image according to a respective frame. In particular, the artificial neural network 6 has been trained according to CIL. To this end, an initial artificial neural network, which is untrained or only partially trained, is provided to the computing unit 4 for training. The motor vehicle is driven manually by a human driver, while the artificial neural network 6 is fed with the respective input including corresponding camera images. The artificial neural network 6 predicts the driving commands and the computing unit 4 computes a loss function depending on a deviation of the predicted driving commands corresponding to actual manual driving actions of the driver. By optimizing the loss function during a plurality of training epochs, the artificial neural network 6 eventually learns to correctly predict the driving commands based on the input. However, according to the CIL concept, the artificial neural network 6 comprises two or more branches corresponding to different environmental contexts. The contexts are defined by respective navigational commands for guiding the motor vehicle 1 according to a predetermined route or trajectory. The navigational commands include, in particular, commands to turn left at an upcoming intersection, turn right at the intersection, cross the intersection in straight line, in particular in case there is no immediately upcoming intersection, keeping the motor vehicle on the present lane. The navigational command is supplied to the artificial neural network 6 as an additional parameter. The computing unit 4 selects one of the two or more branches depending on the provided navigational command. The same is done during training. Consequently, the individual branches of the artificial neural network 6 are trained independent of each other, wherein each branch is trained to correctly predict the respective driving commands with the boundary condition defined by the respective navigational command.

After the training is completed, the computing unit 4 is able to use the trained artificial neural network 6 to predict the at least one driving command depending on the input and, in particular, depending on the camera image, as well as on the respective navigational command. In alternative implementations, the training may be performed by another computing unit and/or another motor vehicle.

According to the improved concept, the navigational command is determined by the computing unit 4 depending on the lidar pointcloud provided to the computing unit 4 by the lidar system 5 for a scan frame matching the respective video frame.

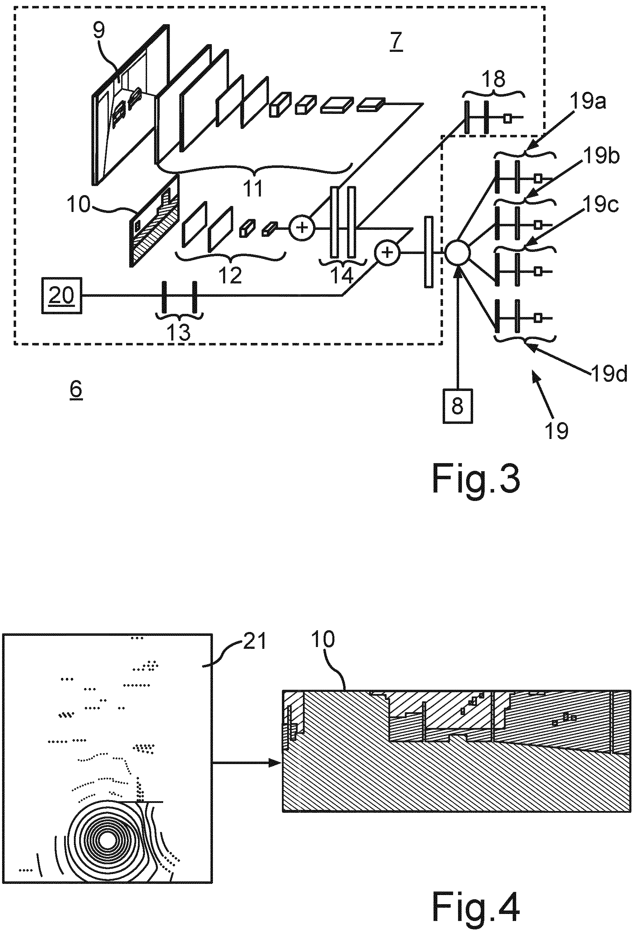

The functioning of the electronic vehicle guidance system 2 is explained in more detail with reference to an exemplary implementation of a method for guiding a motor vehicle 1 according to the improved concept, as shown by means of a schematic flow diagram in Fig. 2. Furthermore, an exemplary architecture of the trained artificial neural network 6 is schematically shown in Fig. 3.

In step S1a of the method, the camera system 3 generates a camera image 9 for a given video frame as described above. In step S1b, the lidar system 5 generates a lidar pointcloud for a matching lidar scan frame as described above. In step S1c, the computing unit 4 determines one or more vehicle status parameters based on sensor data generated by one or more further sensors (not shown) of the motor vehicle 1. The further sensors may for example comprise one or more speed sensors, yaw rate sensors or acceleration sensors, wheel rotation sensors, steering angle sensors et cetera. Consequently, the one or more vehicle status parameters may comprise a current speed of the motor vehicle 1, in particular a longitudinal speed, a current yaw angle or a current yaw rate, a current steering angle, and so forth. Therein, the vehicle status parameters correspond to the respective video frame and lidar scan frame.

In step S2, the computing unit 4 generates an occupancy grid map, OGM, depending on the lidar pointcloud. The computing unit 4 computes a trajectory in the OGM depending on a route for the vehicle 1, wherein the route is given on a predefined roadmap and leads the vehicle 1 to a predefined destination location. In step S3, the computing unit 4 determines, whether an obstacle in the environment conflicts with the actual trajectory depending on the OGM.

In step S5, the computing unit 4 determines or confirms a navigational command for the motor vehicle depending on a result of step S3 as well as on actual coordinates or the actual location of the motor vehicle 1 obtained in step S4 from a receiver (not shown) of a global navigation satellite system, GNSS, such as GPS, of the motor vehicle 1. In particular, if in step S3 there is no obstacle found that conflicts with the actual trajectory, the computing unit 4 determines the navigational command in step S5 according to the unchanged trajectory or, in other words, takes over a previously determined navigational command. However, if in step S3 it is found that an obstacle is in conflict with the trajectory and therefore present on the route on the roadmap, the computing unit 4 determines an amended route leading to the same destination location but which avoids the obstacle. Then, the computing unit 4 computes a corresponding amended trajectory and again checks, whether the amended trajectory is now free of obstacles. If so, the computing unit 4 determines in S5 the respective navigational command according to the amended trajectory and the amended route, respectively. This process may be iteratively repeated in case further obstacles are observed. In the same way, steps S2 to S5 are repeated during the course of the motion of the motor vehicle 1 along its way to reach the destination location. Consequently, the computing unit 4 determines a plurality of navigational commands for guiding the motor vehicle 1 along the way.

In step S7, the computing unit 4 provides an input depending on the camera image 9 and the vehicle status parameters 20 to the neural network 6. In step S8, the computing unit 4 selects one of a plurality of branches 19 of the neural network 6 depending on the actual navigational command provided as a result of step S5. The branches 19 comprise one branch for each of predefined set of possible navigational commands. For example, a first branch 19a may correspond to the navigational command to turn left at an upcoming intersection, a second branch 19b may correspond to the navigational command to turn right at the intersection and a third branch 19c may correspond to the navigational command to cross the intersection in straight line. The fourth branch 19d may correspond to the navigational command to keep on the present lane, in case no intersection is upcoming.

If the first branch 19a is selected, it is applied in step S8a, for example to an intermediate output computed by means of a common portion 7 of the trained artificial neural network 6 based on the input. Analogously, the second branch 19b applied in step S8b, if it has been selected, the third branch 19c is applied in step S8c, if it has been selected, or the fourth branch 19d is applied in step S8d, if it has been selected. The result of step S8 therefore comprises at least one initial driving command for guiding the motor vehicle 1..

In step S10, the computing unit 4 or one or more electronic control units, ECUs, (not shown) of the motor vehicle 1 generate respective control signals for one or more actuators (not shown) of the motor vehicle 1 depending on the initial driving commands in order to guide the motor vehicle 1 automatically accordingly.

In some implementations, the input for the trained artificial neural network 6 further comprises a polar grid view, PGV, image 10, which is generated by the computing unit 4 in an optional step S6 based on the lidar pointcloud. Fig. 4 shows an exemplary representation of a lidar pointcloud 21 in a top view perspective and the corresponding PGV image 10.

In some implementations, the initial driving commands are modified by the computing unit 4 in optional step S9 depending on a predefined kinematic model for the motor vehicle 1. For example, depending on the vehicle status parameters 20, the computing unit 4 may compute an estimated or predicted pose for the motor vehicle 1 based on the kinematic model, for example based on a bicycle model. It is then determined whether the predicted pose conflicts with another obstacle in the environment. If this is the case, the at least one initial driving command may be modified accordingly by the computing unit 4 to receive at least one improved or modified driving command. In step S10, the at least one improved or modified driving command is the used instead of the at least one initial driving command.

In addition to the branches 19, the trained artificial neural network 6 comprises a common portion 7, which is applied to the input independently of the selected branch and the corresponding navigational command 8. The common portion 7 comprises an encoder module 11 for encoding the camera image 9 and, optionally, a further encoder module 12 for encoding the PGV image 10. The corresponding encoded features of the camera image 9 and, if applicable, the PGV image 10 are combined by a module 14, which may for example comprise or consists of one, two or more fully connected layers. Furthermore, the vehicle status parameters 20 are applied to a module 13 of the common portion 7, wherein the module 13 may comprise one or more fully connected layers. An input of a further module 18, which may comprise one, two or more fully connected layers, is connected to an output of the module 14 and may for example provide a target speed for the motor vehicle 1. Furthermore, the respective outputs of the modules 13 and 14 are combined by a further module 24, which may comprise one or more fully connected layers.

Depending on the navigational command 8, one of the branches 19 is selected, wherein each of the branches 19 also may comprise one or more fully connected layers. It is noted that also different architectures and layer types may be used in principle. However, the convolutional layers of the encoder modules 11, 12 are particularly suitable for processing the two-dimensional images like the camera image 9 and the PGV image 10.

As illustrated in Fig. 4, the lidar pointcloud 21 is encoded by means of a PGV algorithm to the PGV image, which may be considered as a grey scale image. The lidar pointcloud 21 is presented in a top view projection and the PGV image provides a two-dimensional dense proximity spherical representation of the environment. Each lidar layer, that is each vertical incident angle, is associated with a row of PGV pixels of the PGV image 10, and each lidar point of the pointcloud 21 is associated with a single column of the PGV pixels of the PGV image 10 based on its horizontal angle. A PGV pixel of the PGV image 10 holds the average real distance value for all lidar pointclouds that are associated with it. The method to generate the PGV image 10 is, for example time linear.

An exemplary implementation of the PGV algorithm is provided as algorithm 1 in pseudo code:

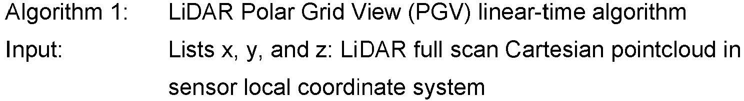

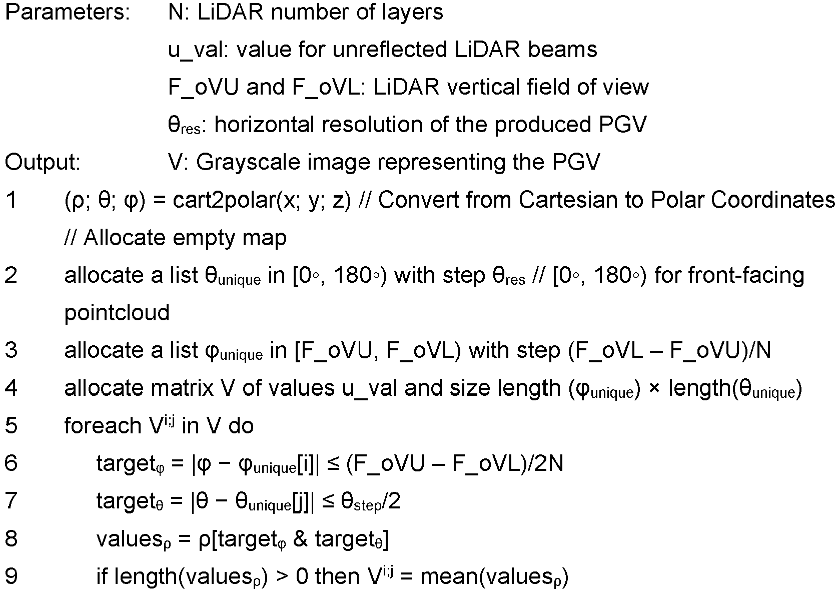

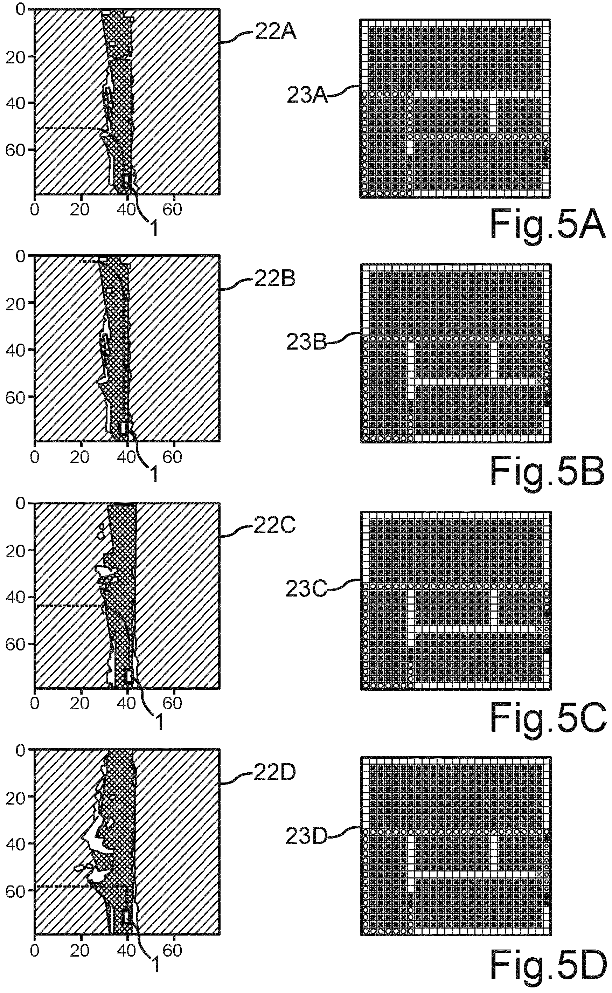

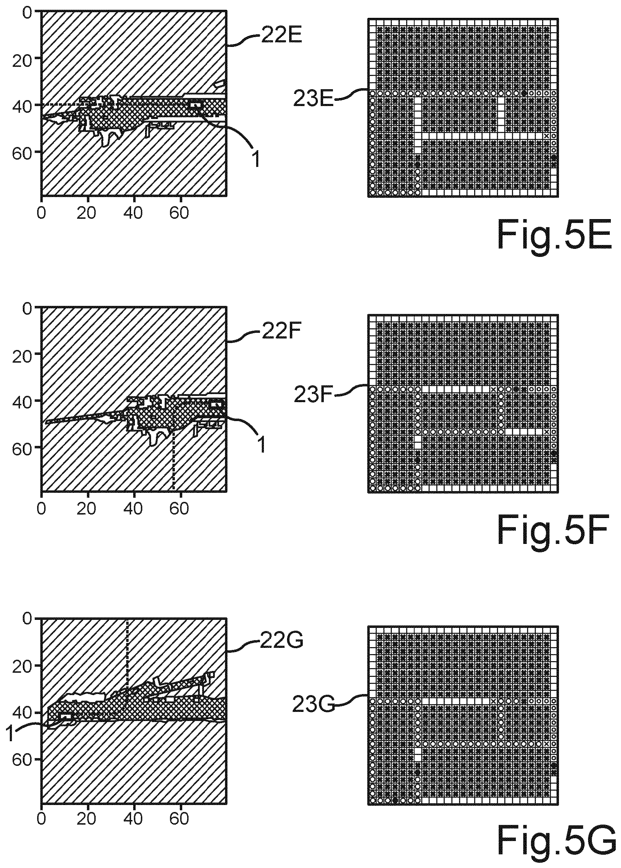

In Figs. 5A to 5G, a sequence of roadmaps 23A to 23G and corresponding OGMs 22A to 22G is shown as generated in an exemplary implementation of the method according to the improved concept in an iterative of repeated manner as described with the steps S1a, S1b, S1c and S2 to S5 of Fig. 2.

In the OGMs 22A to 22G, white regions correspond to occupied grid cells, the cross-shaded regions correspond to unoccupied or free regions or cells and parallel shaded regions correspond to undetermined regions, which are, in particular, out of the field of view of the lidar system 5 or not visible for the lidar system 5. The dashed lines indicate respective actual trajectories for the motor vehicle 1. In the roadmaps 23A to 23G, crosses correspond to buildings or other obstacles, solid circles correspond to actual positions of the motor vehicle 1, shaded circles correspond to an initial destination location, respectively, and empty circles correspond to respective routes for the motor vehicle 1 leading from the initial location to the destination location.

In Fig. 5A, the motor vehicle 1 has just left the initial location and is about to turn left at the upcoming intersection according to the actual route in the roadmap 23A. The actual navigational command is therefore to turn left. However, as can be seen in the OGM 22A, the trajectory collides with an obstacle. Therefore, the route is modified by putting an artificial one-directional wall in the roadmap 23B at the position of the obstacle and an alternative route is determined. The new navigational command is therefore, according to Fig. 5B, crossing the intersection in straight line. In Fig. 5C, the motor vehicle 1 has followed the route further and is about to turn left again. The navigational command is therefore to turn left. In Fig. 5D, the motor vehicle 1 has reached the corresponding intersection to turn left, and there is no conflicting obstacle determined in the OGM 22D.

Consequently, the navigational command stays to turn left. In Fig. 5E, the vehicle has followed the trajectory further and is about to cross another intersection in straight line. However, as can be seen in the OGM 22E, the actual trajectory again conflicts with an obstacle. Therefore, the route is again modified by placing a one-directional wall at the position of the obstacle in the roadmap 23F and changing the route once again to turn left on the following intersection. Therefore, the changed navigational command is to turn left. In Fig. 5G, the motor vehicle 1 has followed the modified route nearly until the destination location and is about to turn left on the last intersection before it reaches the destination location. 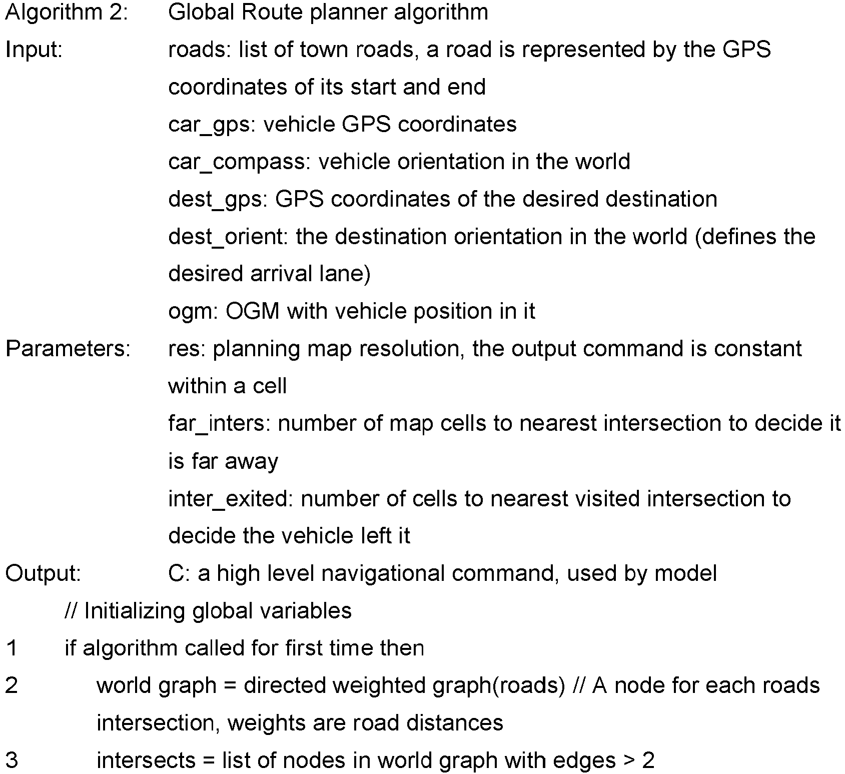 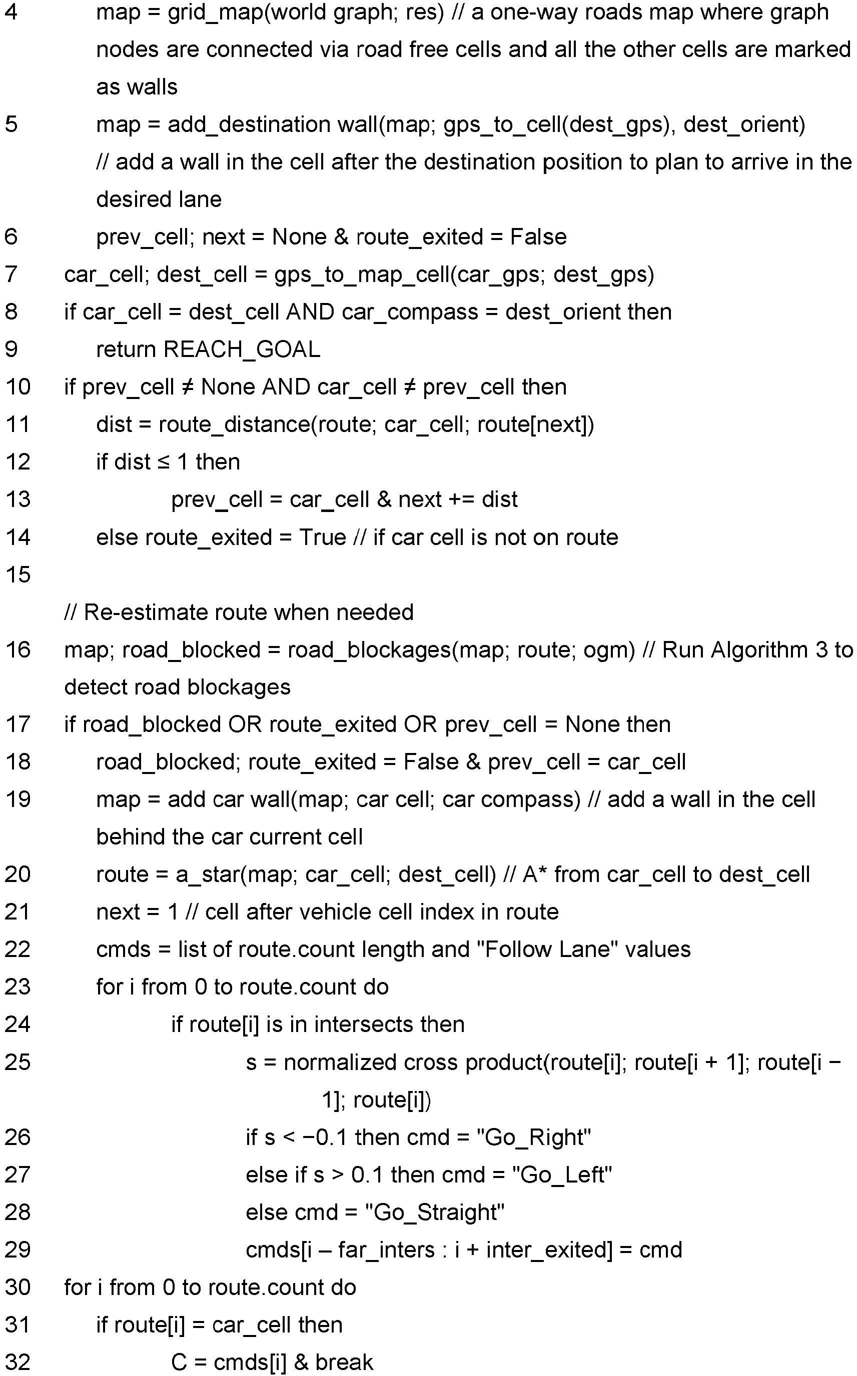 The exemplary algorithm 2 given above in pseudo code describes a route planner, which returns the correct navigational command based on the vehicle's destination location, GPS coordinates and the vehicle's orientation, which may define an arrival lane at the destination location. The planning based on the roadmaps 23A to 23G is for example performed according to a one-lane model for simplicity and to make the planning faster. To determine the respective route, an A*-algorithm may be carried out after setting the respective map cells of the roadmap 23A to 23G after the destination location, and the cell immediately behind the motor vehicle 1 is occupied, in other words putting walls or artificial walls in the roadmap. The A*-algorithm is re-executed only when need in order to change the route.

In step 16 of algorithm 2, the function road_blockages executes an algorithm 3, which is exemplarily given below also in pseudo code:

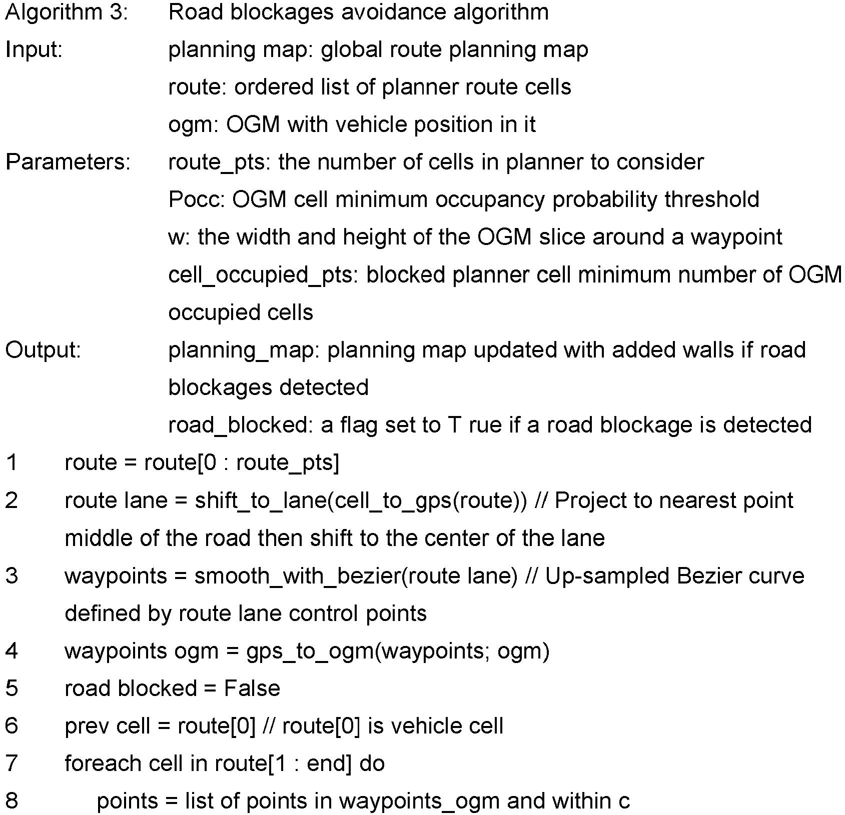

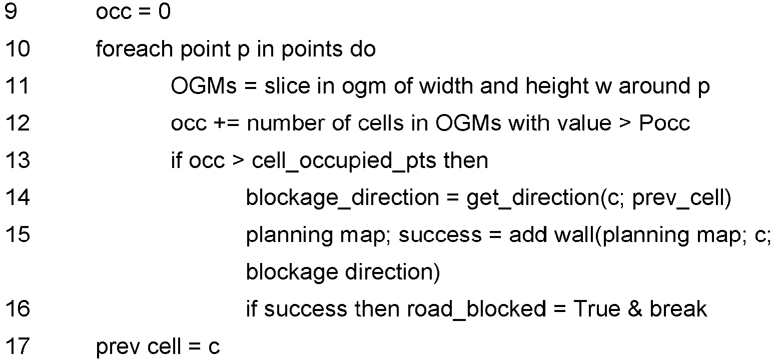

Algorithm 3 is used to check whether a trajectory in the OGM has any conflicting obstacles. The function adds artificial walls to the roadmap 23A to 23G corresponding to the detected obstacles. The added walls are for example directed, wherein the A*-algorithm may decide whether a cell with a wall is blocked or free to travers, based on the direction of the motor vehicle 1 reaching it from previous cells.

Algorithm 3 describes a method to avoid the obstacles based on the OGM method. The algorithm 3 is called by the global algorithm 2, which provides as an input the actual roadmap 23A to 23G, an ordered list of sparse roadmap cell coordinates describing the corresponding route to be followed and the OGM along with its associated position information. The cell coordinates may for example be shifted to the lane's center and may be used as control points that are upsampled and smoothed by means of a Bézier curve. Based on the OGM, it is determined whether the Bézier curve hits an occupancy based on respective predefined thresholds. If an occupancy is detected along the trajectory, a flag "road blocked" is set to true and the roadmap 23A to 23G is updated by adding the corresponding wall. The route planner algorithm 2 calculates a new route which avoids the detected blockage.

The walls added to the roadmap 23A to 23G due to obstacles are, in particular, directed. The "get-direction" function calculates the direction from four possibilities of up, down, left and right between the cells that should have the added wall and its preceding cell in the actual route. The algorithm 2 decides whether the cell with the directed wall is blocked or free to traverse based on the direction of reaching it. The concept of directed walls enables handling partial road blockages, where a single lane is occupied while the other lanes could be free to navigate, while at the same time leveraging the advantages of planning on a one-way lane model map.

It is noted that algorithm 3 may for example consider only near future waypoints to the parameter "route_pts" in order to save computational power.

It is further pointed out that the pseudo code examples for algorithms 1 to 3 are provided in order to illustrate specific embodiments of the improved concept but obviously are not limiting the scope of the improved concept.

As described, in particular with respect to the figures, the improved concept allows to guide a motor vehicle at least in part automatically based on a camera image and a navigational command, in particular based on the CIL approach, more reliably in case of changing environmental conditions.

The CIL approach overcomes the limitations of the basic end-to-end imitation learning and enables the motor vehicle to automatically take specific turns in intersections to reach the destination. The CIL model conditions imitation learning on a high-level navigational command input received from a global route planner that instructs the model to control the vehicle to take a specific turn, go straight to an intersection or follow the actual lane. Benchmark tests have shown that the CIL model is responsive to high-level navigational commands and drives efficiently when tested on the same training environment. However, it is also found that its performance is significantly decreased and is not generalized to new towns or new environments, and it is also found that it is inconsistent against varying weather conditions. Moreover, the CIL method cannot avoid unexpected temporary road blockages, such as work zones. The improved concept overcomes these limitations of CIL by taking into account the output of the lidar system in order to determine the navigational commands and, in some implementations, by adding the lidar-based input together with the camera image for the inference model.

Therefore, the improved concept enables the CIL approach to automatic driving, in particular, to fully autonomous driving, by allowing to detect and avoid unexpected road blockages such as work zones. Furthermore, an improved generalization to new environments and changing weather conditions is achieved.

## Claims

1. Method for guiding a motor vehicle (1) at least in part automatically, wherein
- a camera image (9) representing an environment of the motor vehicle (1) is generated by a camera system (3) of the motor vehicle (1);
- a lidar pointcloud (21) representing the environment is generated by a lidar system (5) of the motor vehicle (1); and
- a navigational command (8) is determined by the computing unit (4) depending on the lidar pointcloud (21);
**characterized in that**
at least one driving command for guiding the motor vehicle (1) at least in part automatically is generated depending on the camera image (9) and depending on the navigational command (8) by using a computing unit (4) of the motor vehicle (1).

2. Method according to claim 1,
**characterized in that**
- a first route on a predefined roadmap (22A, 22B, 22C, 22D, 22E, 22F, 22G) leading to a predefined destination location is determined by the computing unit (4);
- an obstacle on the first route is identified by the computing unit (4) depending on the lidar pointcloud (21); and
- the navigational command (8) is determined by the computing unit (4) depending on the obstacle.

3. Method according to claim 2,
**characterized in that**
- a second route leading to the destination location is determined by the computing unit (4), wherein the obstacle is not present on the second route; and
- the navigational command (8) is determined by the computing unit (4) depending on the second route.

4. Method according to claim 3,
**characterized in that**
- the roadmap (22A, 22B, 22C, 22D, 22E, 22F, 22G) is modified by the computing unit (4) depending on a location of the obstacle; and
- the second route is determined based on the modified roadmap (22A, 22B, 22C, 22D, 22E, 22F, 22G).

5. Method according to one of claims 2 to 4,
**characterized in that**
- an occupancy grid map (23A, 23B, 23C, 23D, 23E, 23F, 23G) is generated by the computing unit (4) depending on the lidar point cloud;
- a trajectory in the occupancy grid map (23A, 23B, 23C, 23D, 23E, 23F, 23G) is computed by the computing unit (4) depending on the first route;
- for identifying the obstacle, a conflict of the trajectory with the obstacle is determined by the computing unit (4) depending on the occupancy grid map (23A, 23B, 23C, 23D, 23E, 23F, 23G).

6. Method according to one of claims 2 to 5,
**characterized in that**
the obstacle is identified depending on a result of a visual perception algorithm, in particular a semantic segmentation algorithm, which is carried out by the computing unit (4) depending on the camera image (9).

7. Method according to claim 6,
**characterized in that**
the obstacle is identified as a static object depending on the result of the visual perception algorithm.

8. Method according to one of the preceding claims,
**characterized in that**
- at least one initial driving command is generated depending on the camera image (9) and depending on the navigational command (8) by the computing unit (4);
- a pose of the motor vehicle is predicted by the computing unit (4) depending on the at least one initial driving command and depending on a predefined kinematic model;
- the at least one driving command is generated by modifying the at least one initial driving command depending on the predicted pose of the vehicle.

9. Method according to one of the preceding claims,
**characterized in that**
- one of two or more branches (19a, 19b, 19c, 19d) of a trained artificial neural network (6) is selected by the computing unit (4) depending on the navigational command (8);
- an input (9, 10, 20) depending on the camera image (9) is supplied to the trained artificial neural network (6) by the computing unit (4); and
- an output of the selected branch (19a, 19b, 19c, 19d) is computed depending on the input (9, 10, 20) by the computing unit (4); and
- the at least one driving command is generated by the computing unit (4) depending on the output of the selected branch.

10. Method according to claim 9,
**characterized in that**
- at least one module (7) of the trained artificial neural network (6) is applied to the input (9, 10, 20) by the computing unit (4) to generate an intermediate output; and
- the selected branch (19a, 19b, 19c, 19d) is applied to the intermediate output by the computing unit (4) to generate the output of the selected branch (19a, 19b, 19c, 19d).

11. Method according to one of claims 9 or 10,
**characterized in that**
the input (9, 10, 20) depends on the lidar pointcloud (21).

12. Method according to one of claims 9 to 11,
**characterized in that**
an initial artificial neural network is trained by using end-to-end learning to obtain the trained artificial neural network (6).

13. Method according to one of claims 9 to 11,
**characterized in that**
an initial artificial neural network is trained by using conditional imitation learning to obtain the trained artificial neural network (6).

14. Electronic vehicle guidance system for a motor vehicle (1), the electronic vehicle guidance system (2) comprising
- a camera system (3), which is configured to generate a camera image (9) representing an environment of the motor vehicle (1);
- a lidar system (5), which is configured to generate a lidar pointcloud (21) representing the environment; and
- a computing unit (4), which is configured to generate navigational command (8) depending on the lidar pointcloud (21);
**characterized in that**
the computing unit (4) is configured to generate at least one driving command for guiding the motor vehicle (1) at least in part automatically depending on the camera image (9) and depending on the navigational command (8).

15. Computer program product comprising instructions, which, when executed by an electronic vehicle guidance system (2) according to claim 14, cause the electronic vehicle guidance system (2) to carry out a method according to one of claims 1 to 13.

## Patentansprüche

1. Verfahren zur zumindest teilweise automatischen Führung eines Kraftfahrzeugs (1), wobei
- ein Kamerabild (9), das eine Umgebung des Kraftfahrzeugs (1) darstellt, von einem Kamerasystem (3) des Kraftfahrzeugs (1) erzeugt wird;
- eine Lidar-Punktwolke (21), die die Umgebung darstellt, von einem Lidar-System (5) des Kraftfahrzeugs (1) erzeugt wird; und
- eine Navigationsanweisung (8) von einer Recheneinheit (4) abhängig von der Lidar-Punktwolke (21) bestimmt wird,
**dadurch gekennzeichnet, dass**
zumindest eine Fahranweisung zur zumindest teilweise automatischen Führung des Kraftfahrzeugs (1) abhängig von dem Kamerabild (9) und von der Navigationsanweisung (8) durch Nutzung einer Recheneinheit (4) des Kraftfahrzeugs (1) erzeugt wird.

2. Verfahren gemäß Anspruch 1,
**dadurch gekennzeichnet, dass**
- eine erste Route auf einer vordefinierten Straßenkarte (22A, 22B, 22C, 22D, 22E, 22F, 22G), die zu einem vordefinierten Zielort führt, von der Recheneinheit (4) bestimmt wird;
- ein Hindernis auf der ersten Route von der Recheneinheit (4) abhängig von der Lidar-Punktwolke (21) identifiziert wird; und
- die Navigationsanweisung (8) von der Recheneinheit (4) abhängig vom Hindernis bestimmt wird.

3. Verfahren gemäß Anspruch 2,
**dadurch gekennzeichnet, dass**
- eine zweite Route, die zu dem Zielort führt, von der Recheneinheit (4) bestimmt wird, wobei das Hindernis auf der zweiten Route nicht vorhanden ist; und
- die Navigationsanweisung (8) von der Recheneinheit (4) abhängig von der zweiten Route bestimmt wird.

4. Verfahren gemäß Anspruch 3,
**dadurch gekennzeichnet, dass**
- die Straßenkarte (22A, 22B, 22C, 22D, 22E, 22F, 22G) von der Recheneinheit (4) abhängig von der Position des Hindernisses modifiziert wird; und
- die zweite Route basierend auf der modifizierten Straßenkarte (22A, 22B, 22C, 22D, 22E, 22F, 22G) bestimmt wird.

5. Verfahren gemäß einem der Ansprüche 2 bis 4,
**dadurch gekennzeichnet, dass**
- eine Belegungsgitterkarte (23A, 23B, 23C, 23D, 23E, 23F, 23G) von der Recheneinheit (4) abhängig von der Lidar-Punktwolke erzeugt wird;
- eine Trajektorie in der Belegungsgitterkarte (23A, 23B, 23C, 23D, 23E, 23F, 23G) von der Recheneinheit (4) abhängig von der ersten Route berechnet wird;
- zum Identifizieren des Hindernisses ein Konflikt der Trajektorie mit dem Hindernis von der Recheneinheit (4) abhängig von der Belegungsgitterkarte (23A, 23B, 23C, 23D, 23E, 23F, 23G) bestimmt wird.

6. Verfahren gemäß einem der Ansprüche 2 bis 5,
**dadurch gekennzeichnet, dass**
das Hindernis abhängig von einem Ergebnis eines visuellen Wahrnehmungsalgorithmus, insbesondere eines semantischen Segmentierungsalgorithmus, der von der Recheneinheit (4) abhängig von dem Kamerabild (9) ausgeführt wird, identifiziert wird.

7. Verfahren gemäß Anspruch 6,
**dadurch gekennzeichnet, dass**
das Hindernis abhängig von dem Ergebnis des visuellen Wahrnehmungsalgorithmus als statisches Objekt identifiziert wird.

8. Verfahren gemäß einem der vorhergehenden Ansprüche,
**dadurch gekennzeichnet, dass**
- mindestens eine initiale Fahranweisung von der Recheneinheit (4) abhängig von dem Kamerabild (9) und von der Navigationsanweisung (8) erzeugt wird;
- eine Pose des Kraftfahrzeugs von der Recheneinheit (4) abhängig von der mindestens einen initialen Fahranweisung und abhängig von einem vordefinierten kinematischen Modell prädiziert wird;
- die mindestens eine Fahranweisung von der Recheneinheit (4) durch Modifikation der mindestens einen initialen Fahranweisung abhängig von der prädizierten Pose des Fahrzeugs erzeugt wird.

9. Verfahren gemäß einem der vorhergehenden Ansprüche,
**dadurch gekennzeichnet, dass**
- einer von zwei oder mehr Zweigen (19a, 19b, 19c, 19d) eines trainierten künstlichen neuronalen Netzwerks (6) von der Recheneinheit (4) abhängig von der Navigationsanweisung (8) ausgewählt wird;
- eine Eingabe (9, 10, 20) abhängig von dem Kamerabild (9) von der Recheneinheit (4) an das trainierte künstliche neuronale Netzwerk (6) geliefert wird;
- eine Ausgabe des ausgewählten Zweigs (19a, 19b, 19c, 19d) von der Recheneinheit (4) abhängig von der Eingabe (9, 10, 20) berechnet wird;
- die mindestens eine Fahranweisung von der Recheneinheit (4) abhängig von der Ausgabe des ausgewählten Zweigs erzeugt wird.

10. Verfahren gemäß Anspruch 9,
**dadurch gekennzeichnet, dass**
- mindestens ein Modul (7) des trainierten künstlichen neuronalen Netzwerks (6) von der Recheneinheit (4) auf die Eingabe (9, 10, 20) angewendet wird, um eine Zwischenausgabe zu erzeugen; und
- der ausgewählte Zweig (19a, 19b, 19c, 19d) von der Recheneinheit (4) auf die Zwischenausgabe angewendet wird, um die Ausgabe des ausgewählten Zweigs (19a, 19b, 19c, 19d) zu erzeugen.

11. Verfahren gemäß einem der Ansprüche 9 oder 10,
**dadurch gekennzeichnet, dass**
die Ausgabe (9, 10, 20) von der Lidar-Punktwolke (21) abhängt.

12. Verfahren gemäß einem der Ansprüche 9 bis 11,
**dadurch gekennzeichnet, dass**
ein initiales künstliches neuronales Netzwerk mittels Ende-zu-Ende-Lernen trainiert wird, um das trainierte künstliche neuronale Netzwerk (6) zu erhalten.

13. Verfahren gemäß einem der Ansprüche 9 bis 11,
**dadurch gekennzeichnet, dass**
ein initiales künstliches neuronales Netzwerk mittels bedingtem Imitationslernens trainiert wird, um das trainierte künstliche neuronale Netzwerk (6) zu erhalten.

14. Elektronisches Fahrzeugführungssystem für ein Kraftfahrzeug (1), das elektronisches Fahrzeugführungssystem (2) aufweisend
- ein Kamerasystem (3), das dazu eingerichtet ist, ein Kamerabild (9) zu erzeugen, das eine Umgebung des Kraftfahrzeugs (1) darstellt;
- ein Lidar-System (5), das dazu eingerichtet ist, eine Lidar-Punktwolke (21) zu erzeugen, die die Umgebung darstellt; und
- eine Recheneinheit (4), die dazu eingerichtet ist, eine Navigationsanweisung (8) abhängig von der Lidar-Punktwolke (21) zu erzeugen;
**dadurch gekennzeichnet, dass**
die Recheneinheit (4) dazu eingerichtet ist, mindestens eine Fahranweisung zur zumindest teilweise automatischen Führung des Kraftfahrzeugs (1) abhängig von dem Kamerabild (9) und der Navigationsanweisung (8) zu erzeugen.

15. Computerprogrammprodukt mit Anweisungen, die, wenn sie von einem elektronischen Fahrzeugführungssystem (2) gemäß Anspruch 14 ausgeführt werden, das elektronische Fahrzeugführungssystem (2) dazu veranlassen, ein Verfahren gemäß einem der Ansprüche 1 bis 13 auszuführen.

## Revendications

1. Procédé de guidage au moins en partie automatique d'un véhicule à moteur (1) , dans lequel
- une image de caméra (9) représentant un environnement du véhicule à moteur (1) est générée par un système de caméra (3) du véhicule à moteur (1) ;
- un nuage de points lidar (21) représentant l'environnement est généré par un système lidar (5) du véhicule à moteur (1) ; et
- une commande de navigation (8) est déterminée par l'unité de calcul (4) en fonction du nuage de points lidar (21) ;
**caractérisé en ce que**
au moins une commande de conduite pour le guidage au moins en partie automatique du véhicule à moteur (1) est générée en fonction de l'image de caméra (9) et en fonction de la commande de navigation (8) au moyen d'une unité de calcul (4) du véhicule à moteur (1).

2. Procédé selon la revendication 1,
**caractérisé en ce que**
- un premier itinéraire sur une carte routière (22A, 22B, 22C, 22D, 22E, 22F, 22G) prédéfinie menant à un emplacement de destination prédéfini est déterminé par l'unité de calcul (4) ;
- un obstacle sur le premier itinéraire est identifié par l'unité de calcul (4) en fonction du nuage de points lidar (21) ; et
- la commande de navigation (8) est déterminée par l'unité de calcul (4) en fonction de l'obstacle.

3. Procédé selon la revendication 2,
**caractérisé en ce que**
- un deuxième itinéraire menant à l'emplacement de destination est déterminé par l'unité de calcul (4), l'obstacle n'étant pas présent sur le deuxième itinéraire ; et
- la commande de navigation (8) est déterminée par l'unité de calcul (4) en fonction du deuxième itinéraire.

4. Procédé selon la revendication 3,
**caractérisé en ce que**
- la carte routière (22A, 22B, 22C, 22D, 22E, 22F, 22G) est modifiée par l'unité de calcul (4) en fonction d'un emplacement de l'obstacle ; et
- le deuxième itinéraire est déterminé à partir de la carte routière (22A, 22B, 22C, 22D, 22E, 22F, 22G) modifiée.

5. Procédé selon l'une des revendications 2 à 4,
**caractérisé en ce que**
- une carte à grille d'occupation (23A, 23B, 23C, 23D, 23E, 23F, 23G) est générée par l'unité de calcul (4) en fonction du nuage de points lidar ;
- une trajectoire dans la carte à grille d'occupation (23A, 23B, 23C, 23D, 23E, 23F, 23G) est générée par l'unité de calcul (4) en fonction du premier itinéraire ;
- pour l'identification de l'obstacle, un conflit de la trajectoire avec l'obstacle est déterminé par l'unité de calcul (4) en fonction de la carte à grille d'occupation (23A, 23B, 23C, 23D, 23E, 23F, 23G).

6. Procédé selon l'une des revendications 2 à 5,
**caractérisé en ce que**
l'obstacle est identifié en fonction d'un résultat d'un algorithme de perception visuelle, en particulier d'un algorithme de segmentation sémantique, qui est mis en œuvre par l'unité de calcul (4) en fonction de l'image de caméra (9).

7. Procédé selon la revendication 6,
**caractérisé en ce que**
l'obstacle est identifié comme un objet statique en fonction du résultat de l'algorithme de perception visuelle.

8. Procédé selon l'une des revendications précédentes, **caractérisé en ce que**
- au moins une commande de conduite initiale est générée en fonction de l'image de caméra (9) et en fonction de la commande de navigation (8) par l'unité de calcul (4) ;
- une pose du véhicule à moteur est prédite par l'unité de calcul (4) en fonction de l'au moins une commande de conduite initiale et en fonction d'un modèle cinématique prédéfini ;
- l'au moins une commande de conduite est générée en modifiant l'au moins une commande de conduite initiale en fonction de la pose prédite du véhicule.

9. Procédé selon l'une des revendications précédentes, **caractérisé en ce que**
- l'une d'au moins deux branches (19a, 19b, 19c, 19d) d'un réseau de neurones artificiels entrainé (6) est sélectionnée par l'unité de calcul (4) en fonction de la commande de navigation (8) ;
- une entrée (9, 10, 20) fonction de l'image de caméra (9) est fournie au réseau de neurones artificiels entrainé (6) par l'unité de calcul (4) ; et
- une sortie de la branche (19a, 19b, 19c, 19d) sélectionnée est calculée en fonction de l'entrée (9, 10, 20) par l'unité de calcul (4) ; et
- l'au moins une commande de conduite est générée par l'unité de calcul (4) en fonction de la sortie de la branche sélectionnée.

10. Procédé selon la revendication 9,
**caractérisé en ce que**
- au moins un module (7) du réseau de neurones artificiels entrainé (6) est appliqué à l'entrée (9, 10, 20) par l'unité de calcul (4) afin de générer une sortie intermédiaire ; et
- la branche (19a, 19b, 19c, 19d) sélectionnée est appliquée par l'unité de calcul (4) à la sortie intermédiaire afin de générer la sortie de la branche (19a, 19b, 19c, 19d) sélectionnée.

11. Procédé selon l'une des revendications 9 ou 10,
**caractérisé en ce que**
l'entrée (9, 10, 20) est fonction du nuage de points lidar (21).

12. Procédé selon l'une des revendications 9 à 11,
**caractérisé en ce que**
un réseau de neurones artificiels initial est entraîné en utilisant un apprentissage de bout en bout afin d'obtenir le réseau de neurones artificiels entraîné (6).

13. Procédé selon l'une des revendications 9 à 11,
**caractérisé en ce que**
un réseau de neurones artificiels initial est entraîné en utilisant un apprentissage par imitation conditionnelle afin d'obtenir le réseau de neurones artificiels entraîné (6).

14. Système électronique de guidage de véhicule pour un véhicule à moteur (1), le système électronique de guidage de véhicule (2) comprenant
- un système de caméra (3), configuré pour générer une image de caméra (9) représentant un environnement du véhicule à moteur (1) ;
- un système lidar (5), configuré pour générer un nuage de points lidar (21) représentant l'environnement ; et
- une unité de calcul (4), configurée pour générer une commande de navigation (8) en fonction du nuage de points lidar (21) ;
**caractérisé en ce que**
l'unité de calcul (4) est configurée pour générer au moins une commande de conduite pour le guidage au moins en partie automatique du véhicule à moteur (1) en fonction de l'image de caméra (9) et en fonction de la commande de navigation (8).

15. Produit-programme d'ordinateur comprenant des instructions qui, lorsqu'elles sont exécutées par un système électronique de guidage de véhicule (2) selon la revendication 14, amènent le système électronique de guidage de véhicule (2) à mettre en œuvre un procédé selon l'une des revendications 1 à 13.
